# EUROPÄISCHE PATENTSCHRIFT

(11) **EP 2 147 204 B1**
(45) Veröffentlichungstag und Bekanntmachung des Hinweises auf die Patenterteilung: **07.09.2011**
(21) Anmeldenummer: 08750328.0
(22) Anmeldetag: 16.05.2008
(51) Int. Cl.: F02C 9/00, F02C 6/00, F02C 9/28, F23R 3/42

(54) **GASTURBOGRUPPE SOWIE VERFAHREN ZUR STEUERUNG EINER GASTURBOGRUPPE**
GAS TURBO SET AND METHOD FOR CONTROLLING A GAS TURBO SET
GROUPE TURBINES À GAZ ET PROCÉDÉ DE COMMANDE D'UN GROUPE TURBINES À GAZ

(30) Priorität: 24.05.2007 EP 07010377
(43) Veröffentlichungstag der Anmeldung: 27.01.2010
(73) Patentinhaber: Siemens Aktiengesellschaft, 80333 München (DE)
(72) Erfinder: HELMERS, Lennard, 45481 Mülheim a.d. Ruhr (DE); KREBS, Werner, 45481 Mülheim an der Ruhr (DE); VAN KAMPEN, Jaap, NL-6042 AR Roermond (NL)
(86) Internationale Anmeldenummer: PCT/EP2008/056044
(87) Internationale Veröffentlichungsnummer: WO 2008/142020

(56) Entgegenhaltungen:
- EP-A- 0 646 705
- DE-A1- 2 830 724
- DE-A1- 4 422 701
- DE-B- 1 145 438
- GB-A- 279 770
- US-A- 3 088 281

## Beschreibung

Die Erfindung betrifft eine Gasturbogruppe, umfassend eine erste und eine zweite Turbine sowie eine dazwischen geschaltete, auf Selbstzündung operierende Brennkammer, die an einer um eine Achse drehbaren Welle angeordnet sind. Die Erfindung betrifft weiterhin ein Verfahren zur Steuerung einer solchen Gasturbogruppe.

Bei einer Gasturbogruppe, umfassend zwei Gasturbinen, erfolgt eine sequentielle Verbrennung, für die zwei z.B. ringförmige Brennkammern und/oder Ringrohr-Brennkammern vorgesehen sind: Die eine ist hochdruckseitig und die andere ist niederdruckseitig angeordnet. Der hochdruckseitigen Brennkammer wird verdichtete Luft zugeführt, die mit Brennstoff vermischt und die Mischung angezündet wird. Stromab der Hochdruck-Brennkammer ist eine erste Gasturbine, eine Hochdruck-Turbine angeordnet, die von den in der Hochdruck-Brennkammer erzeugten Heißgasen angetrieben wird. Dabei erfahren die Heißgase eine Teilentspannung, weisen jedoch beim Verlassen der Hochdruck-Turbine eine relativ hohe Temperatur auf, beispielsweise im Bereich zwischen 900°C und 1.400°C. Stromab der Hochdruck-Turbine ist eine zweite Niederdruck-Brennkammer angeordnet, die auf Selbstzündung operiert und in der insbesondere die in der ersten Brennkammer bei der Verbrennung nicht verbrauchte Luft an einer zweiten Verbrennung teilnimmt. Diese Niederdruck-Brennkammer hat im Wesentlichen die Form eines durchströmten Ringkanals, in welchen Brennstoff eingedüst wird. Bei einer Temperatur der Abgase aus der Hochdruck-Turbine ab 850°C findet in der Niederdruck-Brennkammer eine Selbstzündung des eingedüsten Brennstoffes statt. Die Niederdruck-Brennkammer ist für gewöhnlich in zwei Bereiche unterteilt: In einen Anströmbereich, in welchem sich die Abgase nach der Hochdruck-Turbine mit dem Brennstoff vermischen, und in einen Verbrennungsbereich, in welchem der zweite Verbrennungsprozess in der Gasturbogruppe stattfindet. Der Niederdruck-Brennkammer ist eine zweite Gasturbine, die insbesondere eine Niederdruck-Turbine ist, nachgeschaltet. Wichtig für die Ausgestaltung der Niederdruck-Brennkammer ist, dass sie eine ausreichende Länge aufweist, damit sich Abgase und Brennstoff gut vermischen können und für eine vollständige Verbrennung lange genug in der Brennkammer verweilen.

Eine Gasturbogruppe der eingangs genannten Art geht beispielsweise aus der Offenlegungsschrift DE 44 22 701 A1 hervor. In dieser Offenlegungsschrift ist ein Verfahren zur Regeltung der Gasturbogruppe beschrieben, bei dem eine Temperatur der Abgase aus der ersten Turbine unmittelbar vor dem Ort der Selbstzündung in der zweiten Brennkammer gemessen wird und durch die gemessene Temperatur die Brennstoffmengen für die verschiedenen Brennkammern geregelt wird.

Aus der Offenlegungsschrift DE 42 32 383 A1 ist eine weitere Gasturbogruppe zu entnehmen, bei der einer Gasströmung eine schraubenförmige Drallbewegung aufgezwungen wird, um eine längere Durchlauf - oder Verweilzeit in einer Ringbrennkammer zwischen zwei Turbinen zu erreichen. Hierzu weist die stromab der Brennkammer gelegte Turbine keine erste Leitschaufelreihe auf, so dass die erste Laufschaufelreihe dieser Turbine mit dem Drall aus der stromauf gelegenen Turbine beaufschlagt wird.

Die EP 0 646 705 zeigt eine Gasturbogruppe umfassend zumindest zwei Turbinen, welche auf einer gemeinsamen Welle angeordnet sind. Dabei ist die zweite nachgeschaltete Turbine volumenmäßig größer als die erste Turbine.

Der Erfindung liegt die Aufgabe zugrunde, eine Gasturbogruppe mit einer verbesserten Effizienz bei einem reduzierten NOₓ-Ausstoß anzugeben. Der Erfindung liegt weiterhin die Aufgabe zugrunde, ein Verfahren zum Steuern einer solchen Gasturbogruppe anzugeben.

Die erstgenannte Aufgabe wird erfindungsgemäß gelöst durch eine Gasturbogruppe nach Anspruch 1.

Die Erfindung basiert auf der Überlegung, dass bei einer zweiten Turbine, die einen größeren äußeren Umfang aufweist als die erste Turbine bzw. bezüglich der Achse radial weiter außen angeordnet ist, sich im Betrieb in der stromab angeordneten Turbine besonders günstige Strömungsverhältnisse einstellen, die zu einer erhöhten Effizienz der Gasturbogruppe führen. Um das Arbeitsvolumen der Turbine trotzdem beizubehalten, wird ihre Höhe kleiner gestaltet als die Höhe der Niederdruck-Turbinen aus dem Stand der Technik. Unter Höhe der Turbine wird hierbei der Abstand zwischen einer radial inneren und einer radial äußeren Wand der Turbine und unter Arbeitsvolumen wird das Volumen des hohlen ringförmigen Innenraums der Turbine verstanden. Wegen der kleiner gewählten Höhe werden die Leit- und Laufschaufeln der zweiten Turbine relativ klein ausgestaltet. Dabei wird die vorteilhafte Relation ausgenutzt, dass mit einem wachsenden radialen Abstand der Schaufeln zur Drehachse die Kraft zum Versetzen der Turbine in eine Drehbewegung immer kleiner wird. Die verbesserten Randbedingungen zum Antreiben der zweiten Turbine können außerdem vorteilhafterweise genutzt werden, um die Anzahl der Schaufeln, deren Herstellung aufwändig und kostspielig ist, zu reduzieren. Die kleinere Ausgestaltung und/oder reduzierte Anzahl von Schaufeln wirkt sich außerdem positiv auf die Kühlerfordernisse aus, da die zu kühlende Schaufelfläche kleiner ist als bei den bekannten Niederdruck-Turbinen. Da es sich bei den Turbinen um solche handelt, die mittels der Abgase aus einer Brennkammer angetrieben werden, werden sie weiterhin auch als Gasturbinen bezeichnet. Die Komponenten der Gasturbogruppe können hierbei an einer gemeinsamen Welle angeordnet sein. Alternative können der Hochdruck- und Niederdruck-Teil der Gasturbogruppe an separaten Wellen angeordnet sein, die mit unterschiedlichen Drehgeschwindigkeiten rotieren.

Gemäß einer bevorzugten Ausgestaltung ist ein die erste Turbine angrenzender Anströmbereich der Brennkammer nach Art eines Diffusors ausgebildet. Ein Diffusor ist durch einen sich stromab kontinuierlich, insbesondere stetig, erweiterten Querschnitt gekennzeichnet. Aufgrund des immer wachsenden Volumens in Strömungsrichtung verlangsamt sich der Gasstrom im Anströmbereich, wodurch seine Verweilzeit zunimmt. Dies stellt eine optimale Voraussetzung für eine besonders gute Vermischung der Abluft aus der ersten Turbine mit dem eingedüsten Brennstoff dar. Durch die Ausbildung des Anströmbereichs nach Art eines Diffusors kann somit die Brennkammer eine kürzere Länge aufweisen als eine Brennkammer mit einem konstanten Querschnitt.

Der Diffusor wird ausgebildet, indem vorzugsweise nur der radiale Abstand einer radial äußeren Wand des Anströmbereichs in Bezug auf die Achse zunimmt. Dies ermöglicht eine konstruktiv einfache Realisierung des Diffusors, da sozusagen nur die äußere Form des Anströmbereichs verändert wird. Eine radial innere Wand der Brennkammer bleibt unverändert. Hierbei wird der Spielraum genutzt, der nach außen in Radialrichtung zur Verfügung steht, um die radial äußere Wand in einer geeigneten geneigten Stellung gegenüber der Welle auszubilden, so dass in Anströmbereich sich Strömungsverhältnisse mit erwünschten Strömungsparametern einstellen.

Vorzugsweise ist eine Brennstoffleitung vorgesehen, die in den Diffusor mündet. Bevorzugt mündet die Brennstoffleitung in einen vorderen Bereich des Diffusors mündet, welcher Bereich etwa der Hälfte der Axiallänge und insbesondere etwa 1/3 der Axiallänge des Diffusors entspricht. Aufgrund der immer noch hohen Geschwindigkeit des Gasstroms am Anfang des Diffusors ist die statische Temperatur in diesem Bereich relativ niedrig. Dies verlangsamt die Selbstzündung des Brennstoff-Abluft-Gemisches in dem Anströmbereich, wodurch sich der Brennstoff besonders gut mit der Abluft aus der ersten Gasturbine vermengen kann. Dies wiederum führt zu einer Reduktion der Stickoxide beim Verbrennungsprozess. Da durch die vorgeschlagene Anordnung der Brennstoffleitung der größte Teil der Diffusorlänge zum Vermischen des Brennstoffs mit der Abluft benutzt wird, wobei die Gase lange genug im Diffusor verweilen, um einen hohen Vermischungsgrad zu erreichen, kann die Gesamtlänge der Brennkammer relativ kurz gehalten werden.

Gemäß einer bevorzugten Variante ist ein die zweite Turbine angrenzender Verbrennungsbereich der Brennkammer nach Art einer Düse ausgebildet. Im Gegenteil zum Anströmbereich weist der Verbrennungsbereich hierbei einen sich kontinuierlich, insbesondere stetig verengenden Querschnitt in Strömungsrichtung auf. In der Düse werden die Abgase nach der Verbrennung wieder beschleunigt, wodurch der dynamisch Druck steigt, so dass die Niederdruck-Turbine durch die beschleunigte Gasströmung angetrieben wird. Diese Konstruktion ist besonders geeignet zum Erreichen eines erforderlichen Drucks zum Antreiben der Niederdruck-Turbine.

Die Düse ist ausgebildet, indem bevorzugt nur der radiale Abstand einer radial inneren Wand des Verbrennungsbereichs in Bezug auf die Achse zunimmt. Der größte Radialabstand der radial äußeren Wand, der im Bereich des Diffusors erreicht wird, wird im Verbrennungsbereich beibehalten. Zur Ausbildung der Düse wird ausschließlich die radial innere Wand des Verbrennungsbereichs geneigt gegenüber der Achse ausgebildet, so dass sich diese Wand in Strömungsrichtung radial immer weiter von der Achse erstreckt.

Zweckdienlicherweise ist zwischen dem Anströmbereich und dem Verbrennungsbereich der Brennkammer ein Vermischungsbereich vorgesehen, dessen radial innere Wand den gleichen Abstand zur Achse aufweist wie der Verbrennungsbereich und dessen radial äußere Wand den gleichen Abstand zur Achse aufweist wie der Verbrennungsbereich. Der Vermischungsbereich bildet somit den Teil der Brennkammer mit dem größten Querschnitt. Dabei ist der Gasstrom im Vermischungsbereich am langsamsten bzw. weist er die längste Verweilzeit auf, so dass eine maximale Vermengung des Brennstoffes mit der Abluft aus der ersten Gasturbine erfolgt. Durch eine geeignet gewählte Länge des Vermischungsbereichs kann auf eine besonders einfache Weise eine erwünschte Verweilzeit des Gasstroms in der Brennkammer eingestellt werden. Durch die gewählte Form der Wandkontur werden außerdem Rückströmungen der Gasströmung vermieden. Zusätzlich wird durch das vorgeschlagene Design der Brennkammer die Ausbildung von Totzonen unterdrückt.

Die zweitgenannte Aufgabe wird erfindungsgemäß gelöst durch ein Verfahren zur Steuerung einer Gasturbogruppe umfassend eine erste und eine zweite Gasturbine sowie eine dazwischen geschaltete, auf Selbstzündung operierende Brennkammer, die an einer um eine Achse drehbaren, gemeinsamen Welle angeordnet sind, wobei ein Gasstrom im Anschluss an die erste Turbine durch die Brennkammer zu der in Bezug auf die Achse radial weiter außen liegenden zweiten Turbine geführt wird.

Die im Hinblick auf die Gasturbogruppe aufgeführten Vorteile und bevorzugten Ausführungsformen lassen sich sinngemäß auf das Verfahren übertragen.

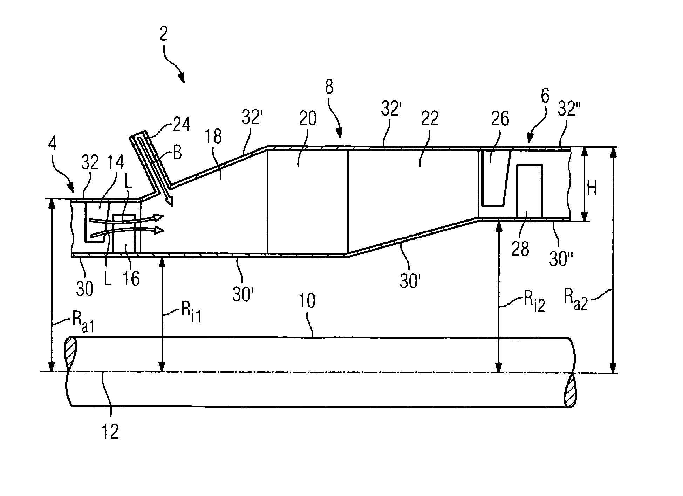

Ein Ausführungsbeispiel der Erfindung wird anhand einer Zeichnung näher erläutert. Die einzige Figur zeigt schematisch eine Gasturbogruppe mit einer Brennkammer, die zwischen zwei Turbinen angeordnet ist.

Die Turbogruppe 2 gemäß der Figur umfasst im Wesentlichen eine erste Turbine 4, eine zweite Turbine 6 sowie eine dazwischen geschaltete Ring-Brennkammer 8. Die beiden Turbinen 4,6 und die Brennkammer 8 liegen auf einer gemeinsamen Rotorwelle 10, die um eine Achse 12 drehbar angeordnet ist. Die Turbine 4 ist in diesem Ausführungsbeispiel eine Hochdruck-Gasturbine und die Turbine 6 stellt eine Niederdruck-Gasturbine einer Kraftwerksanlage dar.

Der Hochdruck-Turbine 4 ist eine vordere Brennkammer vorgeschaltet, die in der Figur nicht näher dargestellt ist. In der vorderen Brennkammer wird ein Brennstoff-Luftgemisch verbrannt, mit dem die Schaufeln der Hochdruck-Gasturbine 4 beaufschlagt werden. In der Figur ist eine letzte Leitschaufelreihe der Hochdruck-Turbine 4 durch eine Leitschaufel 14 und eine letzte Laufschaufelreihe durch eine Laufschaufel 16 angegeben.

Das durch die Hochdruck-Turbine 4 durchströmende Gasgemisch enthält noch Luft, die an dem Verbrennungsprozess nicht teilgenommen hat. Diese Abluft ist mit Pfeilen L dargestellt. Nach der Hochdruck-Turbine 4 wird die Abluft L in die Brennkammer 8 geführt. Die Brennkammer 8 besteht in diesem Ausführungsbeispiel aus drei Bereichen: Aus einem Anströmbereich 18, einem Vermischungsbereich 20 und einem Verbrennungsbereich 22. Am Anfang des Anströmbereichs 18 mündet eine Brennstoffleitung 24 über die ein insbesondere gasförmiger Brennstoff B in die Brennkammer 8 eingeleitet wird. Im Anströmbereich 18 sowie im nachfolgenden Vermischungsbereich 20 findet eine Vermengung der Abluft L mit dem Brennstoff B statt, bevor sich das Gasgemisch im Verbrennungsbereich 22 beim Erreichen einer Temperatur von über 850°C zündet.

Der Abgasstrom aus der Brennkammer 8 wird schließlich in die Niederdruck-Brennkammer 6 geleitet. In der Niederdruck-Brennkammer 6 ist eine erste Leitschaufelreihe durch eine Leitschaufel 26 und eine erste Laufschaufelreihe durch eine Laufschaufel 28 dargestellt.

Im Axialschnitt betrachtet weisen die Turbinen 4,6 und die Brennkammer 8 jeweils eine zylinderförmige radial innere Wand 30,30',30" auf, weiterhin Innenwand genannt, die von einer insbesondere konzentrisch angeordneten radial äußeren Wand 32,32',32", weiterhin als Außenwand bezeichnet, umschlossen ist. Die Innenwände 30,30',30" grenzen an die Welle 10 an oder sind von der Welle 10 selbst gebildet. Zwischen den Innenwänden und den Außenwenden ist daher jeweils ein Ringraum gebildet. Die Außenwände 32,32',32" stellen eine Abdeckung der jeweiligen Komponente 4, 5, 8 der Gasturbogruppe 2 dar, die insbesondere nach Art eines einzigen Gehäuses zusammengefügt werden können.

Die Innenwand 30 der ersten Turbine 4 weist einen radialen Abstand Rᵢ₁ und die Außenwand 32 einen Abstand Rₐ₁ zur Achse 12 auf. Bei der in der Figur gezeigten Gasturbogruppe 2 ist die zweite Turbine 6 in Bezug auf die Achse 12 radial weiter nach außen angeordnet als die erste Turbine 4. Das heißt, dass die Innenwand 30 " der zweiten Turbine 6 einen radialen Abstand Rᵢ₂ zur Achse 12 aufweist, der größer ist als der radiale Abstand Rᵢ₁. Gleichzeitig ist der radiale Abstand Rₐ₂ der Außenwand 32 " der zweiten Turbine 6 ebenfalls größer als der radiale Abstand Rₐ₁ der ersten Turbine 4.

Durch die radial weiter nach außen liegende Position der Niederdruck-Turbine 6 ist weniger Kraft zum Antreiben der Turbine 6 erforderlich als wenn sie sich auf dem gleichen radialen Niveau wie die erste Turbine 4 befinden würde. Dies führt zu besonders günstigen Strömungsverhältnissen in der zweiten Turbine 6, so dass eine Höhe H der zweiten Turbine 6 relativ klein gehalten werden kann. Durch die entsprechend kleine Dimensionierung der Schaufeln 26,28 der Turbine 6 ist zudem der Verbrauch an Kühlluft zum Kühlen dieser Schaufeln 26,28 verringert. Insgesamt ist somit im Vergleich zu den bekannten Gasturbogruppen, bei denen sich beide Turbinen auf dem gleichen radialen Abstand zur Achse befinden (siehe insbesondere DE 42 32 383 A1) oder bei denen die zweite Turbine radial tiefer liegt als die erste Turbine (siehe DE 44 22 701 A1), durch einfache konstruktive Veränderungen der Gasturbogruppe 2 eine höhere Effizienz erreicht.

Die konstruktiven Maßnahmen zur Ausbildung der zweiten Turbine 6 radial weiter nach außen liegend als die erste Turbine 4 umfassen in diesem Ausführungsbeispiel eine stetige Erweiterung des Querschnitts des Anströmbereichs 18 sowie eine gleichzeitige stetige Verengung des Querschnitts des Verbrennungsbereichs 22. Wichtig hierbei ist, dass nur der radiale Abstand der Außenwand 32' des Anströmbereichs 18 in Strömungsrichtung zunimmt, während die Innenwand 30' der Brennkammer 8 im Bereich des Anströmbereichs 18 auf dem gleichen radialen Niveau bleibt wie die Innenwand 30 der ersten Gasturbine 4. Somit befindet sich die Außenwand 32' bereits beim Vermischungsbereich 20 auf dem höchsten Radialabstand Rₐ₂ zur Achse 12.

Der Anströmbereich 18 ist somit nach Art eines Diffusors ausgebildet. Dies hat die Wirkung, dass sich das Brennstoff-Abluft-Gemisch in Strömungsrichtung verlangsamt, wodurch seine Verweilzeit in der Brennkammer 8 zunimmt. Die Abluft L und der Brennstoff B können sich somit sehr gut vermengen, so dass eine besonders Verbrennung bei niedriger statischen Temperatur erfolgt, bei der eine reduzierte Menge an Stickoxiden entsteht.

Die Verweilzeit der Gase in der Brennkammer 8 kann im Wesentlichen durch zwei Parameter eingestellt werden. Dies kann zum einen über die Geschwindigkeit erfolgen, auf die die Gase L,B im Diffusor heruntergebremst werden. Diese Geschwindigkeit ist eine Funktion des Neigungswinkels der Außenwand 32' sowie der Länge des Anströmbereichs 18. Die Verweilzeit kann zum anderen auch durch die Länge des Vermischungsbereichs 20 beeinflusst werden, wenn ein solcher Vermischungsbereich 20 vorgegeben ist.

Die Anbringung der zweiten Turbine 6 in einer radial höheren Position bezüglich der ersten Turbine 4 erfolgt in einem zweiten Schritt im Bereich des Verbrennungsbereichs 22, der nach Art einer Düse ausgebildet ist. Hierbei bleibt die Außenwand 32' der Brennkammer 8 auf dem höchsten Radialabstand Rₐ₂. Es wird lediglich die Innenwand 30' der Brennkammer 8 geändert, indem die Wand 30' in eine geneigte Stellung gebracht wird, so dass ihr radialer Abstand in Strömungsrichtung von Rᵢ₁ bis Rᵢ₂ kontinuierlich zunimmt. Der Gasstrom wird hierbei beim Durchströmen der Brennkammer 8 von einer in Bezug auf die Achse 12 radial inneren Position, die der radialen Position der ersten Turbine 4 entspricht, zu einer radial weiter außen liegenden Position geführt, die durch die Position der zweiten Turbine 6 definiert ist.

## Patentansprüche

1. Gasturbogruppe (2) umfassend eine erste und eine zweite Turbine (4, 6) sowie eine dazwischen geschaltete, auf Selbstzündung operierende Brennkammer (8), die an einer um eine Achse (12) drehbaren Welle (10) angeordnet sind,
**dadurch gekennzeichnet, dass** die Innenwand (30) der ersten Turbine (4) einen radialen Abstand (Rᵢ₁) und die Außenwand (32) der ersten Turbine (4) einen radialen Abstand (Rₐ₁) zur Achse (12) aufweist, und wobei die Innenwand (30 ") der zweiten Turbine (6) einen radialen Abstand (Rᵢ₂) und die Außenwand (32'') der zweiten Turbine (6) einen radialen Abstand (Rₐ₂) zur Achse (12) aufweist und wobei der radiale Abstand der Innenwand der zweiten Turbine (Rᵢ₂) größer ist als der radiale Abstand der Innenwand der ersten Turbine (Rᵢ₁) und gleichzeitig der radiale Abstand der Aussenwand der zweiten Turbine (Rₐ₂) ebenfalls größer als der radiale Abstand der Aussenwand der ersten Turbine (Rₐ₁) ist.

2. Gasturbogruppe (2) nach Anspruch 1,
**dadurch gekennzeichnet, dass** ein die erste Turbine (4) angrenzender Anströmbereich (18) der Brennkammer (8) nach Art eines Diffusors ausgebildet ist.

3. Gasturbogruppe (2) nach Anspruch 2,
**dadurch gekennzeichnet, dass** zur Ausbildung des Diffusors nur der radiale Abstand einer radial äußeren Wand (32') des Anströmbereichs (18) in Bezug auf die Achse (12) zunimmt.

4. Gasturbogruppe (2) nach Anspruch 2 oder 3,
**dadurch gekennzeichne**t, **dass** eine Brennstoffleitung (24) vorgesehen ist, die in den Diffusor (18) mündet.

5. Gasturbogruppe (2) nach Anspruch 4,
**dadurch gekennzeichnet, dass** die Brennstoffleitung (24) in einem vorderen Bereich des Diffusors (18) mündet, welcher Bereich etwa 1/2 der Axiallänge und insbesondere etwa 1/3 der Axiallänge des Diffusors (18) entspricht.

6. Gasturbogruppe (2) nach einem der vorhergehenden Ansprüche,
**dadurch gekennzeichnet, dass** ein an die zweite Turbine angrenzender Verbrennungsbereich (22) der Brennkammer (8) nach Art einer Düse ausgebildet ist.

7. Gasturbogruppe (2) nach Anspruch 6,
**dadurch gekennzeichnet, dass** zur Ausbildung der Düse nur der radiale Abstand einer radial inneren Wand (30') des Verbrennungsbereichs (22) in Bezug auf die Achse (12) zunimmt.

8. Gasturbogruppe (2) nach den Ansprüchen 2 und 6,
**dadurch gekennzeichnet, dass** zwischen dem Anströmbereich (18) und dem Verbrennungsbereich (22) ein Vermischungsbereich (20) vorgesehen ist, dessen radial innere Wand (30') den gleichen radialen Abstand (Rᵢ₁) zur Achse (12) aufweist wie eine radial innere Wand (30') des Anströmbereichs (18) und dessen radial äußere Wand (32') den gleichen radialen Abstand (Rₐ₂) zur Achse (12) aufweist wie eine radial äußere Wand (32') des Verbrennungsbereichs (22).

## Claims

1. Gas turbo set (2), comprising a first and a second turbine (4, 6) and an interposed combustion chamber (8) operating by autoignition, which are arranged on a shaft (10) rotatable about an axis (12), **characterized in that** the inner wall (30) of the first turbine (4) is at a radial distance (Rᵢ₁) and the outer wall (32) of the first turbine (4) is at a radial distance (Rₐ₁) from the axis (12), and the inner wall (30") of the second turbine (6) being at a radial distance (Rᵢ₂) and the outer wall (32") of the second turbine (6) being at a radial distance (Rₐ₂) from the axis (12), and the radial distance of the inner wall of the second turbine (Rᵢ₂) being greater than the radial distance of the inner wall of the first turbine (Rᵢ₁) , and additional to that the radial distance of the outer wall of the second turbine (Rₐ₂) being greater than the radial distance of the outer wall of the first turbine (Rₐ₁).

2. Gas turbo set (2) according to Claim 1, **characterized in that** an inflow region (18), adjacent to the first turbine (4), of the combustion chamber (8) is designed in the manner of a diffuser.

3. Gas turbo set (2) according to Claim 2, **characterized in that**, in order to form the diffuser, only the radial distance from a radially outer wall (32') of the inflow region (18) with respect to the axis (12) increases.

4. Gas turbo set (2) according to Claim 2 or 3, **characterized in that** a fuel line (24) which issues into the diffuser (18) is provided.

5. Gas turbo set (2) according to Claim 4, **characterized in that** the fuel line (24) issues in a front region of the diffuser (18), which region corresponds to approximately 1/2 of the axial length and, in particular, to approximately 1/3 of the axial length of the diffuser (18).

6. Gas turbo set (2) according to one of the preceding claims, **characterized in that** a combustion region (22), adjacent to the second turbine, of the combustion chamber (8) is designed in the manner of a nozzle.

7. Gas turbo set (2) according to Claim 6, **characterized in that**, in order to form the nozzle, only the radial distance from a radially inner wall (30') of the combustion region (22) with respect to the axis (12) increases.

8. Gas turbo set (2) according to Claims 2 and 6, **characterized in that**, between the inflow region (18) and the combustion region (22), an intermixing region (20) is provided, the radially inner wall (30') of which is at the same radial distance (Rᵢ₁) from the axis (12) as a radially inner wall (30') of the inflow region (18) and the radially outer wall (32') of which is at the same radial distance (Rₐ₂) from the axis (12) as a radially outer wall (32') of the combustion region (22).

## Revendications

1. Groupe ( 2 ) turbines à gaz comprenant une première et une deuxième turbines ( 4, 6 ) ainsi qu'une chambre de combustion ( 8 ) montée entre elles et fonctionnant à auto-allumage, qui sont montées sur un arbre ( 10 ) tournant autour d'un axe ( 12 ), **caractérisé en ce que** la paroi ( 30 ) intérieure de la première turbine ( 4 ) a par rapport à l'axe ( 12 ) une distance radiale ( Rᵢ₁ ) et la paroi ( 32 ) extérieure de la première turbine ( 4 ) a par rapport à l'axe une distance ( Rₐ₁ ) radiale et dans lequel la paroi ( 30' ) intérieure de la deuxième turbine ( 16 ) a par rapport à l'axe ( 12 ) une distance ( Rᵢ₂ ) radiale et la paroi ( 32" ) extérieure de la deuxième turbine ( 6 ) a par rapport à l'axe une distance ( Rₐ₂ ) radiale et dans lequel la distance ( Rᵢ₂ ) radiale de la paroi intérieure de la deuxième turbine est plus grande que la distance ( Rᵢ₁ ) radiale de la paroi intérieure de la première turbine et en même temps la distance ( Rₐ₂ ) radiale de la paroi extérieure de la deuxième turbine est également plus grande que la distance ( Rₐ₁ ) radiale de la paroi extérieure de la première turbine.

2. Groupe ( 2 ) turbines à gaz suivant la revendication 1, **caractérisé en ce qu'**une zone ( 18 ) d'afflux de la chambre de combustion ( 8 ) voisine de la première turbine ( 4 ) est constituée à la manière d'un diffuseur.

3. Groupe ( 2 ) turbines à gaz suivant la revendication 2, **caractérisé en ce que** pour la formation du diffuseur seule la distance radiale d'une paroi ( 32" ) extérieure radialement de la zone ( 18 ) d'afflux augmente par rapport à l'axe.

4. Groupe ( 2 ) turbines à gaz suivant la revendication 2 ou 3,
**caractérisé en ce qu'**il est prévu un conduit ( 24 ) pour du combustible qui débouche dans le diffuseur ( 18 ).

5. Groupe ( 2 ) turbines à gaz suivant la revendication 4,
**caractérisé en ce que** le conduit ( 24 ) pour du combustible débouche dans une zone avant du diffuseur ( 18 ), laquelle la zone représente environ la moitié de la longueur axiale et notamment environ le tiers de la longueur axiale du diffuseur ( 18 ).

6. Groupe ( 2 ) turbines à gaz suivant l'une des revendications précédentes,
**caractérisé en ce qu'**une zone ( 22 ) de combustion, voisine de la deuxième turbine, de la chambre de combustion ( 8 ) est constituée à la manière d'une tuyère.

7. Groupe ( 2 ) turbines à gaz suivant la revendication 6,
**caractérisé en ce que** pour la formation de la tuyère seule la distance radiale d'une paroi ( 30' ) intérieure radialement de la zone ( 22 ) de combustion augmente par rapport à l'axe ( 12 ).

8. Groupe ( 2 ) turbines à gaz suivant la revendication 2 et 6,
**caractérisé en ce qu'**entre la zone ( 18 ) d'afflux et la zone ( 22 ) de combustion est prévue une zone ( 20 ) de mélange dont la paroi ( 30' ) intérieure radiale a la même distance ( Ri1 ) radiale par rapport à l'axe ( 12 ) qu'une paroi ( 30' ) intérieure radialement de la zone ( 18 ) d'afflux et dont la paroi ( 32' ) extérieure radialement a la même distance ( Ra2 ) radiale par rapport à l'axe ( 12 ) qu'une paroi ( 32' ) extérieure radialement de la zone ( 22 ) de combustion.
